# EUROPEAN PATENT APPLICATION

(11) **EP 4 624 887 A1**
(43) Date of publication of application: **01.10.2025**
(21) Application number: 25159500.5
(22) Date of filing: 21.02.2025
(51) Int. Cl.: G01L 9/00, G01L 19/00, G01L 19/06

(54) **PRESSURE SENSOR WITH HIGH-PRESSURE PORT**

(30) Priority: 28.03.2024 IN 202411025183
(71) Applicant: Honeywell International Inc., Charlotte, NC 28202 (US)
(72) Inventor: YAGATI, Veeresh Shivaprakash, Charlotte, 28202 (US); MN, Naveen Kumar, Charlotte, 28202 (US); NAGISETTY, Pavankumar, Charlotte, 28202 (US)
(74) Representative: Haseltine Lake Kempner LLP

(57) **Abstract**

A pressure sensor is provided. For example, a pressure sensor comprises a port portion and a pressure transfer portion. The port portion defines a longitudinal bore therethrough and comprises a proximal portion adapted to connect to a fluid output to receive a fluid whose pressure is to be measured and a distal portion defining a distal open end having a first diameter and having a planar end surface surrounding the distal open end. The distal portion defines a circumferential groove proximal to the planar end surface and having a second diameter greater than the first diameter. The pressure transfer portion comprises an externally threaded portion in threaded engagement with the port portion and a flange at a distal end of the externally threaded portion. The flange has a proximal planar surface surrounding the externally threaded portion which is welded to the planar end surface of the port portion.

## Description

### FIELD OF THE INVENTION

Embodiments of the present disclosure generally relate to imaging systems, and, more particularly, to microchannel slides used with imaging systems.

### BACKGROUND

Pressure sensors are devices which sense and measure pressure, such as of a fluid (gas or liquid) used in a manufacturing process. In some applications, pressure sensors are used to measure high pressure fluids, for example fluids at 5,000 to 10,000 pounds per square inch (PSI). It is desirable for such pressure sensors to withstand such high pressures, and pressure changes at such high pressures, for a long period of time. However, some high-pressure sensors have weld joints that are susceptible to damage when exposed to such high pressures.

High pressure sensors often undergo durability tests for the components exposed to rapid high-pressure changes to determine an expected life of such sensors (termed fatigue rated life). For example, some users specify that a high-pressure sensor should withstand about ten million cycles to be rated high pressure.

As such, such high-pressure sensors are plagued by technical challenges and limitations. Through applied effort, ingenuity, and innovation, many of these identified problems have been solved by developing solutions that are included in embodiments of the present disclosure, many examples of which are described in detail herein.

### BRIEF SUMMARY

Various embodiments described herein relate to pressure sensors and associated methods of constructing pressure sensors.

In accordance with various embodiments of the present disclosure, a pressure sensor is provided. In some embodiments, a pressure sensor comprises a port portion, a diaphragm, a pressure transfer portion, and a pressure measurement portion. The port portion defines a longitudinal bore therethrough. The port portion comprises a proximal portion defining a proximal open end and adapted to connect to a fluid output to receive a fluid whose pressure is to be measured by the pressure sensor, and a distal portion defining a distal open end having a first diameter and having a planar end surface surrounding the distal open end. The distal portion further defines a circumferential groove proximal to the planar end surface and has a second diameter greater than the first diameter. The longitudinal bore comprises an internally threaded portion within the distal portion having a third diameter less than the first diameter. The diaphragm is positioned within the longitudinal bore substantially perpendicular to a longitudinal axis of the longitudinal bore, positioned proximal to the internally threaded portion, and adapted to be contacted by the fluid whose pressure is to be measured by the pressure sensor when the port portion is connected to the fluid output. The pressure transfer portion defines a longitudinal pressure transfer bore containing a pressure transfer fluid. The pressure transfer portion comprises (i) an externally threaded portion in threaded engagement with the internally threaded portion within the distal portion of the port portion and (ii) a flange at a distal end of the externally threaded portion. The flange has a proximal planar surface surrounding the externally threaded portion. The proximal planar surface of the flange is welded to the planar end surface of the distal portion of the port portion. The pressure measurement portion has a proximal end attached to a distal end of the pressure transfer portion. The pressure measurement portion comprises a sense die positioned such that the sense die is exposed to the pressure transfer fluid from a distal end of the pressure transfer bore and a circuit board for receiving a signal from the sense die that varies based on a pressure of the pressure transfer fluid against the sense die.

In some embodiments, the fluid whose pressure is to be measured by the pressure sensor comprises a liquid or a gas.

In some embodiments, the sense die comprises a piezoresistive sense die.

In some embodiments, the circuit board determines a resistance of the sense die and provides an output that is representative of the pressure of the pressure transfer fluid against the sense die.

In some embodiments, the pressure transfer fluid comprises an oil.

In some embodiments, the pressure sensor further comprises an electrical output connector electrically connected to the circuit board to receive the output that is representative of the pressure of the pressure transfer fluid against the sense die.

In some embodiments, the electrical output connector is adapted to provide the output that is representative of the pressure of the pressure transfer fluid against the sense die to an external device.

In some embodiments, the proximal planar surface of the flange is laser or electron beam welded to the planar end surface of the distal portion of the port portion.

In some embodiments, the longitudinal bore comprises an internally threaded portion within the proximal portion having a fourth diameter.

In some embodiments, the longitudinal bore comprises a throat having a diameter that is smaller than the fourth diameter and smaller than the third diameter.

In accordance with various embodiments of the present disclosure, a method of constructing a pressure sensor is provided. In some embodiments, the method comprises (a) providing a port portion defining a longitudinal bore therethrough and comprising a proximal portion defining a proximal open end and adapted to connect to a fluid output to receive a fluid whose pressure is to be measured by the pressure sensor, and a distal portion defining a distal open end having a first diameter and having a planar end surface surrounding the distal open end, the distal portion further defining a circumferential groove proximal to the planar end surface and having a second diameter greater than the first diameter, wherein the longitudinal bore comprises an internally threaded portion within the distal portion having a third diameter less than the first diameter; (b) positioning a diaphragm within the longitudinal bore substantially perpendicular to a longitudinal axis of the longitudinal bore and proximal to the internally threaded portion, such that the diaphragm is adapted to be contacted by the fluid whose pressure is to be measured by the pressure sensor when the port portion is connected to the fluid output; (c) attaching a pressure transfer portion having an externally threaded portion and a flange at a distal end of the externally threaded portion to the port portion by threading the externally threaded portion of the pressure transfer portion into engagement with the internally threaded portion of the distal portion of the port portion and welding a proximal planar surface of the flange surrounding the externally threaded portion to the planar end surface of the distal portion of the port portion, wherein the pressure transfer portion defines a longitudinal pressure transfer bore containing a pressure transfer fluid; and (d) attaching a pressure measurement portion having a proximal end to a distal end of the pressure transfer portion, wherein the pressure measurement portion comprises a sense die positioned such that the sense die is exposed to the pressure transfer fluid from a distal end of the pressure transfer bore and a circuit board for receiving a signal from the sense die that varies based on a pressure of the pressure transfer fluid against the sense die.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1 is a top perspective view of an example pressure sensor in accordance with example embodiments of the present disclosure;
FIG. 2 is a bottom perspective view of the example pressure sensor of FIG. 1;
FIG. 3 is a longitudinally bisecting sectional view of the example pressure sensor of FIG. 1;
FIG. 4 is a top perspective view of an example port portion of the example pressure sensor of FIG. 1;
FIG. 5 is a longitudinally bisecting top perspective sectional view of the example port portion of the example pressure sensor of FIG. 4;
FIG. 6 is a longitudinally bisecting front sectional view of the example port portion of FIG. 4;
FIG. 7 is a bottom perspective view of an example pressure transfer portion of the example pressure sensor of FIG. 1;
FIG. 8 is a longitudinally bisecting front sectional view of the example pressure transfer portion of FIG. 7;
FIG. 9 is a longitudinally bisecting front sectional view of the example pressure transfer portion of FIG. 7 mated to the example port portion of FIG. 4; and
FIG. 10 is an enlarged view of a portion of the mating of the example pressure transfer portion of FIG. 7 to the example port portion of FIG. 4.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," "bottom," "left," "right," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The phrases "in one example," "according to one example," "in some examples," and the like generally mean that the particular feature, structure, or characteristic following the phrase may be included in at least one example of the present disclosure and may be included in more than one example of the present disclosure (importantly, such phrases do not necessarily refer to the same example).

If the specification states a component or feature "may," "can," "could," "should," "would," "preferably," "possibly," "typically," "optionally," "for example," "as an example," "in some examples," "often," or "might" (or other such language) be included or have a characteristic, that specific component or feature is not required to be included or to have the characteristic. Such component or feature may be optionally included in some examples, or it may be excluded.

The word "example" or "exemplary" is used herein to mean "serving as an example, instance, or illustration." Any implementation described herein as "example" or "exemplary" is not necessarily to be construed as preferred or advantageous over other implementations.

The term "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information may be transmitted to and/or received from these elements or components.

The term "fluidly coupled," "fluidly coupling," "fluidly couple," "in fluid communication with," "in fluid connection with," or "fluidly connected" in the present disclosure refers to two or more elements or components being connected, directly or indirectly, such that a fluid may flow, directly or indirectly, between the two or more elements or components.

The term "component" may refer to an article, a device, or an apparatus that may comprise one or more surfaces, portions, layers and/or elements. For example, an example component may comprise one or more substrates that may provide underlying layer(s) for the component and may comprise one or more elements that may form part of and/or are disposed on top of the substrate. In the present disclosure, the term "element" may refer to an article, a device, or an apparatus that may provide one or more functionalities.

Various embodiments of the present disclosure overcome the above technical challenges and difficulties and provide various technical improvements and advantages. For example, various embodiments of the present disclosure provide an example pressure sensor and an example method of constructing a pressure sensor.

In various embodiments of the present disclosure, a pressure sensor is provided in which some of the high pressure from the fluid is directed away from a weld that helps secure two components of the pressure sensor together. Directing some of the pressure away from the weld reduces the chance of the weld joint failing and increases the fatigue rated life of the sensor.

In various embodiments of the present disclosure, a pressure sensor is provided that has a port portion having a planar distal end surface surrounding a distal open end that is welded to a corresponding planar surface of a pressure transfer portion. In various embodiments, the port portion defines a circumferential groove that is proximal to the planar end surface and has a diameter greater than a diameter of the distal open end. (As used herein, the term proximal refers to a direction toward an end of the pressure sensor that connects to a fluid access port (which may also be termed a fluid output) to access the fluid whose pressure is to be measured, while the term distal refers to a direction toward the opposite end of the pressure sensor (i.e., away from the port to access the fluid whose pressure is to be measured.)

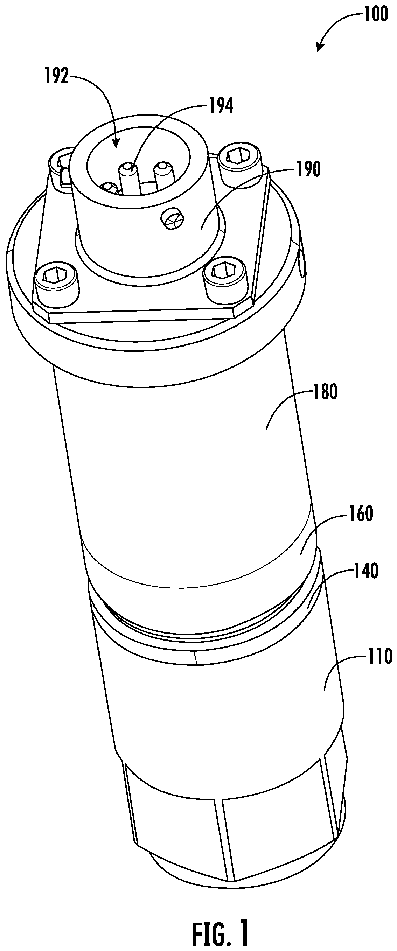

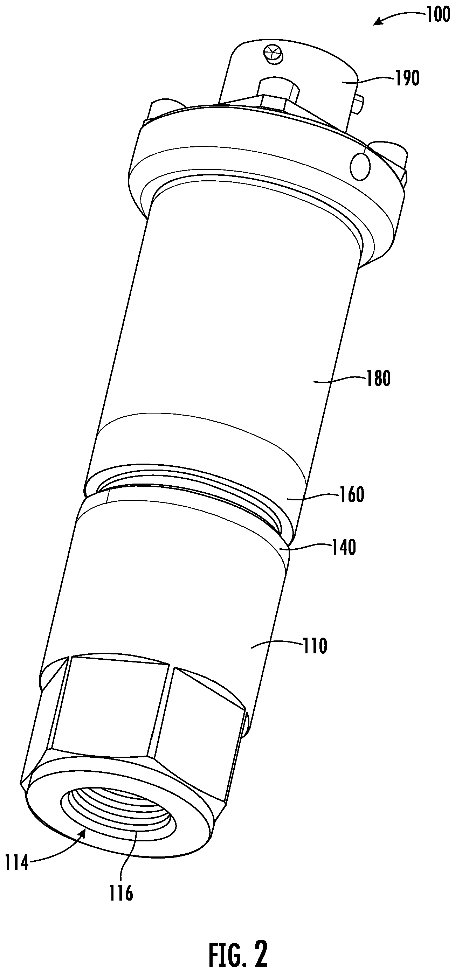

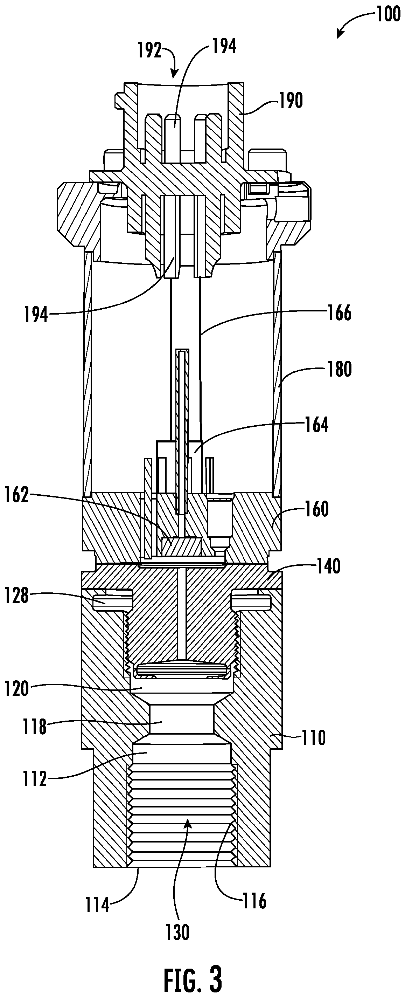

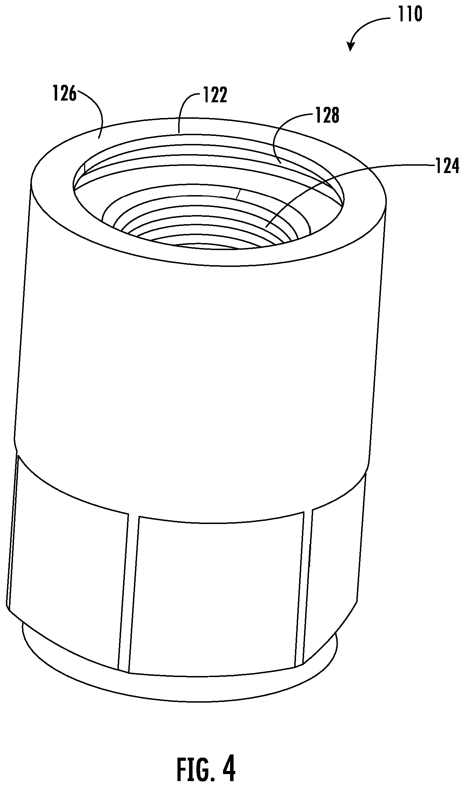

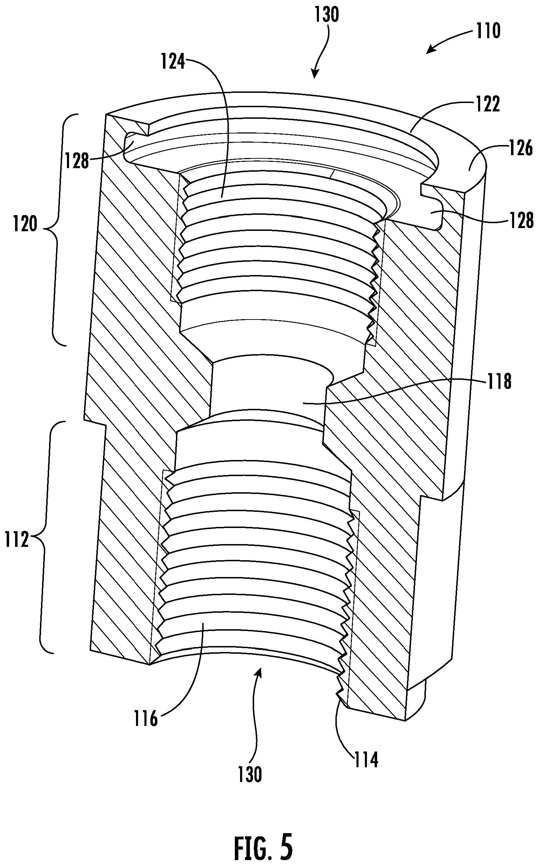

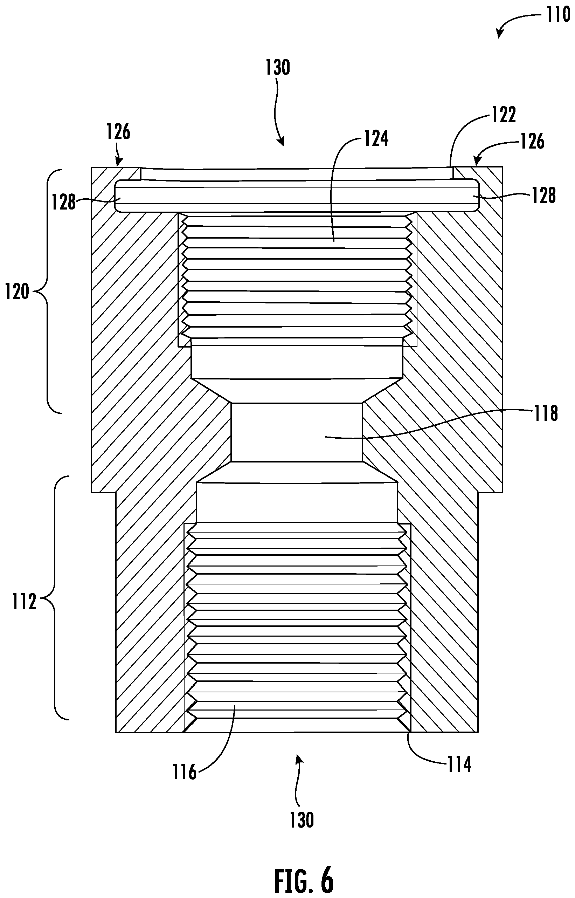

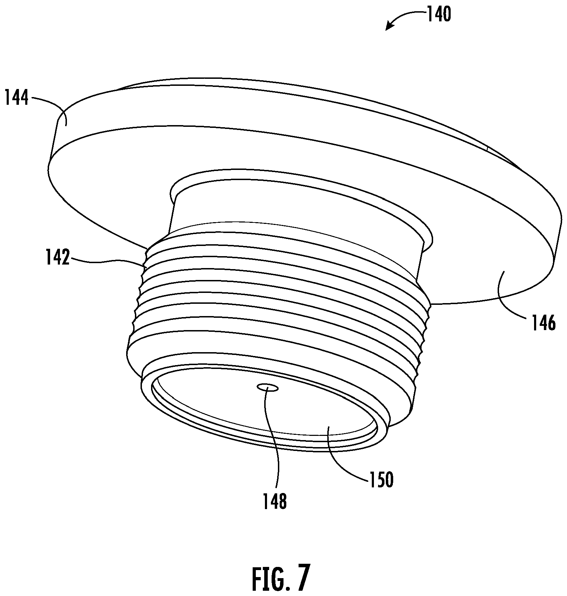

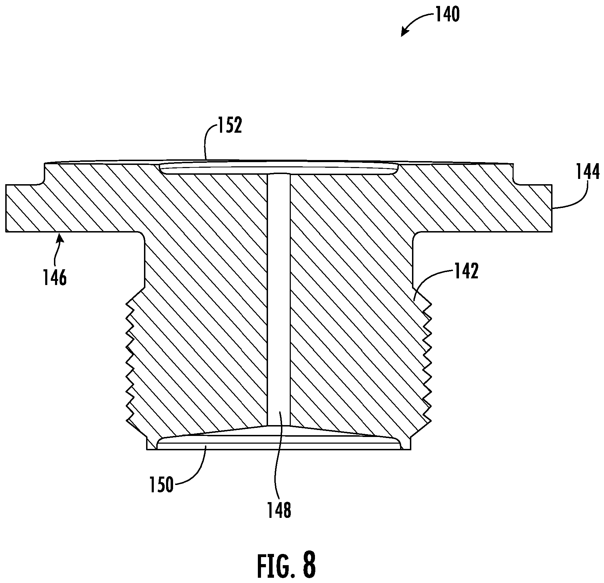

Referring now to FIGS. 1-10, an example pressure sensor is illustrated in accordance with example embodiments of the present disclosure. The pressure sensor 100 of FIGS. 1-10 comprises a port portion 110, a pressure transfer portion 140, a pressure measurement portion 160, a housing extension 180, and an electrical output connector 190. As illustrated in FIG. 2, the port portion 110 of the pressure sensor 100 has a proximal open end 114 and a proximal internally threaded portion 116 for connecting to a fluid access port (not illustrated). As illustrated in FIG. 1, the electrical output connector 190 of the pressure sensor 100 has a distal open end 192 with a plurality of electrical contact pins 194 for electrically connecting the pressure sensor 100 to a computer or the like to receive pressure readings from the pressure sensor 100.

In various embodiments, the port portion 110 defines a longitudinal bore 130 therethrough, providing a pathway for fluid from a fluid access port to the pressure measuring components (described below) of the pressure sensor 100. In various embodiments, the port portion 110 comprises a proximal portion 112 which defines the proximal open end 114 and has the proximal internally threaded portion 116, a distal portion 120 which defines a distal open end 122 and has a distal internally threaded portion 124, and a narrower throat 118 therebetween. In various embodiments, the port portion 110 comprises a planar end surface 126 surrounding the distal open end 122. In various embodiments, the port portion 110 is constructed of any suitable material, such as, but not limited to, 316L stainless steel.

In various embodiments, the pressure transfer portion 140 comprises an externally threaded portion 142 and a flange 144 at a distal end of the externally threaded portion 142. In various embodiments, the flange 144 has a proximal planar surface 146 surrounding the externally threaded portion 142. A longitudinal pressure transfer bore 148 is defined through the pressure transfer portion 140, with an enlarged, funnel-shaped proximal open end 150 and an enlarged distal open end 152. As described further below, a pressure transfer fluid (not illustrated) is contained within the longitudinal pressure transfer bore 148. In various embodiments, the pressure transfer portion 140 is secured to the port portion 110 as described further below.

In various embodiments, a diaphragm 154 is positioned within the longitudinal bore 130 of the port portion 110 substantially perpendicular to a longitudinal axis of the longitudinal bore 130 and proximal to the enlarged, funnel-shaped proximal open end 150 of the pressure transfer portion 140. As described further below, the diaphragm 154 is contacted by the fluid whose pressure is to be measured by the pressure sensor when the port portion 110 is connected to the fluid access port.

In various embodiments, the pressure measurement portion 160 has a proximal end attached to the distal end of the pressure transfer portion 140. In various embodiments, the pressure measurement portion 160 is attached to the pressure transfer portion 140 using any suitable mechanism or method of attachment, including but not limited to laser or electron beam welding. In various embodiments, the pressure measurement portion 160 comprises a sense die 162 positioned such that the sense die 162 is exposed to the pressure transfer fluid from the enlarged distal open end 152 of the pressure transfer bore 148. In some embodiments, the sense die 162 comprises a piezoresistive sense die whose electrical resistance will change based on its volumetric compression caused by the pressure transfer fluid. In various embodiments, the pressure measurement portion 160 further comprises a circuit board 164 electrically connected to the sense die 162 to enable the circuit board 164 to determine the resistance of the sense die 162 and thereby provide an output that is representative of the pressure of the pressure transfer fluid against the sense die 162.

In various embodiments, a housing extension 180 is attached to a distal end of the pressure measurement portion 160 using any suitable mechanism or method of attachment, including but not limited to laser or electron beam welding in order to provide space for the components of the pressure measurement portion 160 that extend beyond its distal end. In various embodiments, the electrical output connector 190 is attached to a distal end of the housing extension 180 using any suitable mechanism or method of attachment, including but not limited to laser or electron beam welding. In various embodiments, a plurality of electrical wires 166 extend through the housing extension 180 to connect the circuit board 164 to the pins 194 of the electrical output connector 190.

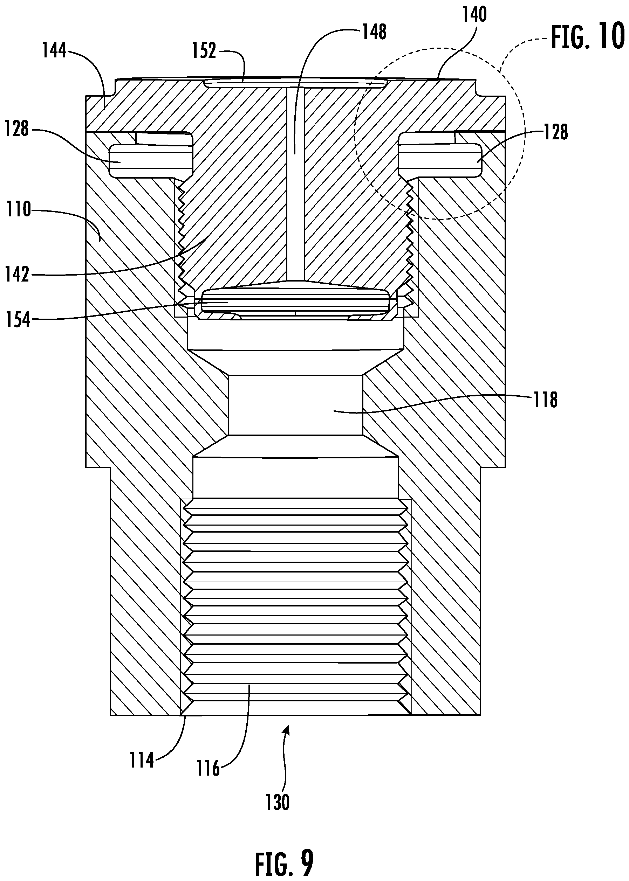

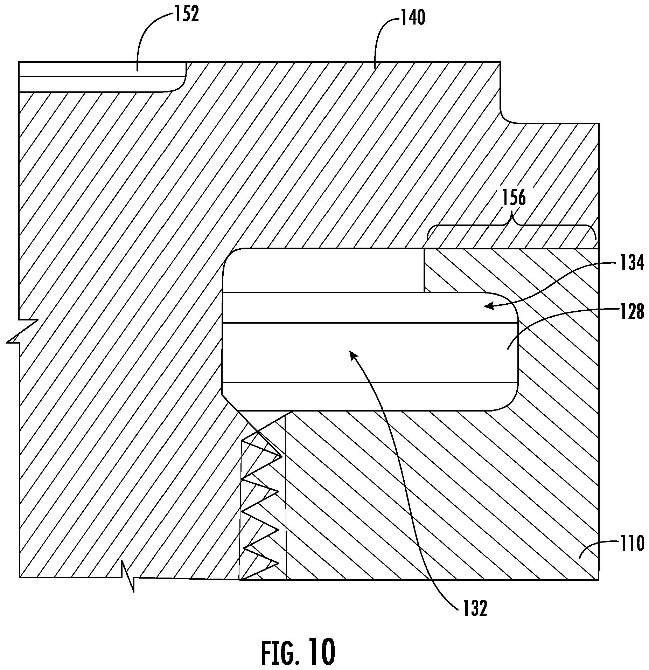

Referring specifically to FIGS. 9 and 10, the connection of the port portion 110 and the pressure transfer portion 140 is described in further detail. As seen in FIG. 9, the externally threaded portion 142 of the pressure transfer portion 140 is in threaded engagement with the distal internally threaded portion 124 of the port portion 110. In operation, some of the pressurized fluid is pushed past the mated threads of the externally threaded portion 142 and the distal internally threaded portion 124 and into a void 132 distal to the mated threads. To prevent leakage of the fluid from the pressure sensor 100, in various embodiments the area 156 where the planar end surface 126 of the port portion 110 and the proximal planar surface 146 of the pressure transfer portion 140 meet is welded. In some embodiments, for example, the area 156 is laser or electron beam welded. In some embodiments, the area 156 is welded from the outside of the mated components. In some embodiments, the weld spans the entire area 156, while in some other embodiments the weld spans only part of the area 156 (for example, about 70% of the area 156 from the outer perimeter toward the void 132).

In some conventional pressure sensors that have a similar void, the high-pressure fluid that has entered such a similar void can exert a great deal of pressure on such a welded joint that may cause a failure of the pressure sensor. In one specific example conventional pressure sensor, the pressure exerted on the welded joint by the high-pressure fluid (of about 5,000 PSI) is nearly 28,000 PSI.

To address this problem of very high pressure on the welded joint, in various embodiments of the present disclosure a circumferential groove 128 is defined in the distal portion 120 of the port portion 110 proximal to the planar end surface 126. The diameter of the circumferential groove 128 is greater than the diameter of the distal open end 122, thereby creating what may be termed an undercut 134 to the planar end surface 126. As illustrated, the diameter of the circumferential groove 128 is also greater than the diameter of the threaded portion of the distal portion 120. In various embodiments, the circumferential groove 128 redirects some of the pressure from the fluid away from the welded joint and into the undercut 134 and against the external wall of the circumferential groove 128. In one specific example embodiment, the pressure exerted on the welded joint by the high-pressure fluid (of about 5,000 PSI) is reduced to about 10,000 PSI by the redirection of some of the pressure. In various embodiments, the pressure exerted on the external wall of the circumferential groove 128 is very high (about 36,000 PSI in one specific example embodiment), but this is less of a concern than high pressure against the welded joint because there is no joint at the area of very high pressure.

In various embodiments, the pressure sensor 100 is attached to an externally threaded fluid access port (not illustrated) via the proximal internally threaded portion 116 of the port portion 110 and electrically connected to a computer or the like via the electrical output connector 190. In operation, the fluid whose pressure is to be measured enters the longitudinal bore 130 from the fluid access port and applies pressure to the proximal side of the diaphragm 154. As described above, some of the fluid flows past the mated threads of the externally threaded portion 142 and the distal internally threaded portion 124 and into the void 132. In various embodiments, the fluid that applies pressure to the proximal side of the diaphragm 154 causes the diaphragm 154 to flex distally in proportion to the amount of pressure being applied by the fluid against the diaphragm 154.

In various embodiments, the distal movement of the diaphragm 154 in turn pushes the pressure transfer fluid (not illustrated) distally within the longitudinal pressure transfer bore 148. The pressure transfer fluid in turn applies pressure against the sense die 162 in proportion to the amount of pressure being applied by the fluid against the diaphragm 154. As described above, in some embodiments the sense die 162 comprises a piezoresistive sense die whose electrical resistance will change based on its volumetric compression caused by the pressure transfer fluid. In various embodiments, the circuit board 164 determines the resistance of the sense die 162 and provides an output that is representative of the pressure of the pressure transfer fluid against the sense die 162, which in turn is calibrated to be representative of the pressure of the fluid from the fluid access port.

While the description above provides an example pressure sensor 100, it is noted that the scope of the present disclosure is not limited to the description above. In some examples, an example pressure sensor 100 in accordance with the present disclosure may be in other forms. In some examples, an example pressure sensor 100 may comprise one or more additional and/or alternative elements, and/or may be structured differently than that illustrated in FIGS. 1-10.

While various embodiments in accordance with the principles disclosed herein have been shown and described above, modifications thereof may be made by one skilled in the art without departing from the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the claims which follow, that scope including all equivalents of the subject matter of the claims. Each and every claim is incorporated as further disclosure into the specification and the claims are embodiment(s) of the present disclosure. Furthermore, any advantages and features described above may relate to specific embodiments but shall not limit the application of such issued claims to processes and structures accomplishing any or all of the above advantages or having any or all of the above features.

In addition, the section headings used herein are provided for consistency with the suggestions under 37 C.F.R. § 1.77 or to otherwise provide organizational cues. These headings shall not limit or characterize the disclosure set out in any claims that may issue from this disclosure. For instance, a description of a technology in the "Background" is not to be construed as an admission that certain technology is prior art to any disclosure in this disclosure. Neither is the "Summary" to be considered as a limiting characterization of the disclosure set forth in issued claims. Furthermore, any reference in this disclosure to "disclosure" or "embodiment" in the singular should not be used to argue that there is only a single point of novelty in this disclosure. Multiple embodiments of the present disclosure may be set forth according to the limitations of the multiple claims issuing from this disclosure, and such claims accordingly define the disclosure, and their equivalents, which are protected thereby. In all instances, the scope of the claims shall be considered on their own merits in light of this disclosure but should not be constrained by the headings set forth herein.

Also, systems, subsystems, apparatuses, techniques, and methods described and illustrated in the various embodiments as discrete or separate may be combined or integrated with other systems, modules, techniques, or methods without departing from the scope of the present disclosure. Other devices or components shown or discussed as coupled to, or in communication with, each other may be indirectly coupled through some intermediate device or component, whether electrically, mechanically, or otherwise. Other examples of changes, substitutions, and alterations are ascertainable by one skilled in the art and could be made without departing from the scope disclosed herein.

Many modifications and other embodiments of the disclosure set forth herein will come to mind to one skilled in the art to which these embodiments pertain having the benefit of teachings presented in the foregoing descriptions and the associated figures. Although the figures only show certain components of the apparatuses and systems described herein, various other components may be used in conjunction with the components and structures disclosed herein. Therefore, it is to be understood that the disclosure is not to be limited to the specific embodiments disclosed and that modifications and other embodiments are intended to be included within the scope of the appended claims. For example, the various elements or components may be combined, rearranged, or integrated in another system or certain features may be omitted or not implemented. Moreover, the steps in any method described above may not necessarily occur in the order depicted in the accompanying drawings, and in some cases one or more of the steps depicted may occur substantially simultaneously, or additional steps may be involved. Although specific terms are employed herein, they are used in a generic and descriptive sense only and not for purposes of limitation.

## Claims

1. A pressure sensor comprising:
a port portion defining a longitudinal bore therethrough and comprising:
a proximal portion defining a proximal open end and adapted to connect to a fluid output to receive a fluid whose pressure is to be measured by the pressure sensor; and
a distal portion defining a distal open end having a first diameter and having a planar end surface surrounding the distal open end, the distal portion further defining a circumferential groove proximal to the planar end surface and having a second diameter greater than the first diameter, wherein the longitudinal bore comprises an internally threaded portion within the distal portion having a third diameter less than the first diameter;
a diaphragm positioned within the longitudinal bore substantially perpendicular to a longitudinal axis of the longitudinal bore, positioned proximal to the internally threaded portion, and adapted to be contacted by the fluid whose pressure is to be measured by the pressure sensor when the port portion is connected to the fluid output;
a pressure transfer portion defining a longitudinal pressure transfer bore containing a pressure transfer fluid and comprising (i) an externally threaded portion in threaded engagement with the internally threaded portion within the distal portion of the port portion and (ii) a flange at a distal end of the externally threaded portion, the flange having a proximal planar surface surrounding the externally threaded portion, wherein the proximal planar surface of the flange is welded to the planar end surface of the distal portion of the port portion; and
a pressure measurement portion having a proximal end attached to a distal end of the pressure transfer portion and comprising a sense die positioned such that the sense die is exposed to the pressure transfer fluid from a distal end of the pressure transfer bore and a circuit board for receiving a signal from the sense die that varies based on a pressure of the pressure transfer fluid against the sense die.

2. The pressure sensor of claim 1, wherein the fluid whose pressure is to be measured by the pressure sensor comprises a liquid or a gas.

3. The pressure sensor of claim 1, wherein the sense die comprises a piezoresistive sense die.

4. The pressure sensor of claim 3, wherein the circuit board determines a resistance of the sense die and provides an output that is representative of the pressure of the pressure transfer fluid against the sense die.

5. The pressure sensor of claim 1, further comprising an electrical output connector electrically connected to the circuit board to receive the output that is representative of the pressure of the pressure transfer fluid against the sense die.

6. The pressure sensor of claim 5, wherein the electrical output connector is adapted to provide the output that is representative of the pressure of the pressure transfer fluid against the sense die to an external device.

7. The pressure sensor of claim 1, wherein the longitudinal bore comprises an internally threaded portion within the proximal portion having a fourth diameter.

8. The pressure sensor of claim 7, wherein the longitudinal bore comprises a throat having a diameter that is smaller than the fourth diameter and smaller than the third diameter.

9. A method of constructing a pressure sensor, the method comprising:
providing a port portion defining a longitudinal bore therethrough and comprising:
a proximal portion defining a proximal open end and adapted to connect to a fluid output to receive a fluid whose pressure is to be measured by the pressure sensor; and
a distal portion defining a distal open end having a first diameter and having a planar end surface surrounding the distal open end, the distal portion further defining a circumferential groove proximal to the planar end surface and having a second diameter greater than the first diameter, wherein the longitudinal bore comprises an internally threaded portion within the distal portion having a third diameter less than the first diameter;
positioning a diaphragm within the longitudinal bore substantially perpendicular to a longitudinal axis of the longitudinal bore and proximal to the internally threaded portion, such that the diaphragm is adapted to be contacted by the fluid whose pressure is to be measured by the pressure sensor when the port portion is connected to the fluid output;
attaching a pressure transfer portion having an externally threaded portion and a flange at a distal end of the externally threaded portion to the port portion by threading the externally threaded portion of the pressure transfer portion into engagement with the internally threaded portion of the distal portion of the port portion and welding a proximal planar surface of the flange surrounding the externally threaded portion to the planar end surface of the distal portion of the port portion, wherein the pressure transfer portion defines a longitudinal pressure transfer bore containing a pressure transfer fluid; and
attaching a pressure measurement portion having a proximal end to a distal end of the pressure transfer portion, wherein the pressure measurement portion comprises a sense die positioned such that the sense die is exposed to the pressure transfer fluid from a distal end of the pressure transfer bore and a circuit board for receiving a signal from the sense die that varies based on a pressure of the pressure transfer fluid against the sense die.

10. The method of claim 9, wherein the fluid whose pressure is to be measured by the pressure sensor comprises a liquid or a gas.

11. The method of claim 9, wherein the sense die comprises a piezoresistive sense die.

12. The method of claim 11, wherein the circuit board determines a resistance of the sense die and provides an output that is representative of the pressure of the pressure transfer fluid against the sense die.

13. The method of claim 9, further comprising:
electrically connecting an electrical output connector to the circuit board to receive the output that is representative of the pressure of the pressure transfer fluid against the sense die;
wherein the electrical output connector is adapted to provide the output that is representative of the pressure of the pressure transfer fluid against the sense die to an external device.

14. The method of claim 9, wherein the longitudinal bore comprises an internally threaded portion within the proximal portion having a fourth diameter.

15. The method of claim 14, wherein the longitudinal bore comprises a throat having a diameter that is smaller than the fourth diameter and smaller than the third diameter.
